# EUROPEAN PATENT APPLICATION

(11) **EP 2 657 556 A2**
(43) Date of publication of application: **30.10.2013**
(21) Application number: 13165114.3
(22) Date of filing: 24.04.2013
(51) Int. Cl.: F16C 33/66, F16N 31/00

(54) **Grease supply system for rolling bearing**

(30) Priority: 26.04.2012 JP 2012101573
(71) Applicant: JTEKT CORPORATION, Osaka-shi Osaka 542-8502 (JP)
(72) Inventor: Kobayashi, Yasuhiro, Osaka-shi,, Osaka 542-8502 (JP)
(74) Representative: Winter, Brandl, Fürniss, Hübner, Röss, Kaiser, Polte - Partnerschaft

(57) **Abstract**

A grease supply system (1) includes a discharge portion (40) that forcibly discharges a grease from a rolling bearing (21,22), a discharge amount measuring portion (42) that measures a discharge amount of grease, a replenishing amount setting portion (37) that sets a replenishing amount of grease on the basis of the discharge amount of grease measured by the discharge amount measuring portion (42), and a supply portion (35) that automatically replenishes the rolling bearing with the set amount of grease.

## Description

### BACKGROUND OF THE INVENTION

### 1. Field of the Invention

The invention relates to a grease supply system that supplies grease to a rolling bearing that supports, for example, a main shaft of a wind power generator system.

### 2. Description of Related Art

Wind power generation is now attracting attention as an eco-friendly way to generate electricity without emitting carbon dioxide, and accordingly has become rapidly spread world-wide. Further, in recent years, wind power generator systems have been built not only on lands but also on the ocean because building wind power generator systems on the ocean is less influenced by geometrical features and is less likely to cause, for example, siting problems and noise problems. On the other hand, providing maintenance of the wind power generator systems has become more difficult. Thus, reducing the frequency of maintenance has been desired.

Japanese Patent Application Publication No. 2010-159710 (JP 2010-159710 A) describes a technology in which the operating state of a wind power generator system is checked in real-time to predict the timing at which maintenance should be provided, whereby the frequency of maintenance is reduced. Specifically, according to the technology described in JP 2010-159710 A, a load applied to a rolling bearing that supports a main shaft to which blades are fitted and the degree of deterioration of lubricant such as grease charged in the rolling bearing in the wind power generator system are detected, and the timing at which maintenance should be provided is determined on the basis of the result of detection. However, in the technology described in JP 2010-159710A, even if deterioration of the lubricant charged in the rolling bearing is detected, it is not possible to replace or replenish the lubricant automatically. Therefore, maintenance needs to be performed in order to replace or replenish the lubricant. Accordingly, the above-described method has not been so effective in reducing the frequency of maintenance.

Japanese Patent Application Publication No. 2003-83351 (JP 2003-83351 A) describes a grease replenishing mechanism capable of automatically replenishing a rolling bearing with grease. It is considered that application of the grease replenishing mechanism to the rolling bearing for a main shaft of a wind power generator system may reduce the frequency of maintenance.

The grease replenishing mechanism described in JP 2003-83351 A supplies new grease into an internal space in the rolling bearing in which grease has been charged, with the use of a pump to automatically discharge the grease from the internal space of the rolling bearing by an amount corresponding to an amount of the supplied new grease, and the amount of the discharged grease is measured by a measuring unit. The grease replenishment mechanism is configured to determine that the replenishment of grease is abnormal if the amount of grease measured by the measuring unit is too small.

However, because the grease is too viscous to be naturally and smoothly discharged, the grease may not be appropriately discharged even if replenishment of the grease is appropriately carried out. In such a case, in the technology described in JP 2003-83351 A, it would be erroneously determined that replenishment of the grease is abnormal. Further, in the case of the wind power generator system, the rotating speed of the main shaft fluctuates largely depending upon the weather condition or the like, resulting in large fluctuations in the state of discharge of the grease. Accordingly, the possibility of frequent occurrence of erroneous determination as stated above would be high.

In order to naturally discharge the grease from the internal space of the rolling bearing by an amount corresponding to the amount of grease which has been newly supplied, the internal space of the rolling bearing needs to be always filled with the grease. This increases the rotating resistance, and as a result, the possibility of leakage of grease would become higher due to overfilling of the internal space with the grease.

### SUMMARY OF THE INVENTION

An object of the invention is to provide a grease supply system for a rolling bearing, which is able to reliably discharge grease from the rolling bearing, and which is able to appropriately adjust a replenishing amount of grease in accordance with an amount of the discharged grease in order to maintain the amount of grease in the rolling bearing at a predetermined amount.

An aspect of the invention relates to a grease supply system for a rolling bearing, including: a discharge portion that forcibly discharges grease from a rolling bearing; a discharge amount measuring portion that measures an amount of grease discharged by the discharge portion; a replenishing amount setting portion that sets a replenishing amount of grease on the basis of the discharge amount of grease measured by the discharge amount measuring portion; and a supply portion that automatically replenishes the rolling bearing with the set amount of grease.

### BRIEF DESCRIPTION OF THE DRAWINGS

The foregoing and further features and advantages of the invention will become apparent from the following description of example embodiments with reference to the accompanying drawings, wherein like numerals are used to represent like elements, and wherein:
FIG. 1 is a schematic view illustrating a wind power generator system to which a grease supply system according to an embodiment of the invention is applied;
FIG. 2 is a schematic view illustrating the grease supply system;
FIG. 3 is a block diagram for illustrating the grease supply system;
FIG. 4 is a schematic view illustrating a discharge portion in a forced discharge unit;
FIG. 5 is a flowchart for explaining a process of operating the grease supply system;
FIG. 6 is a schematic view illustrating a forced discharge unit in another embodiment of the invention; and
FIG. 7 is a schematic view illustrating a forced discharge unit in further another embodiment of the invention.

### DETAILED DESCRIPTION OF EMBODIMENTS

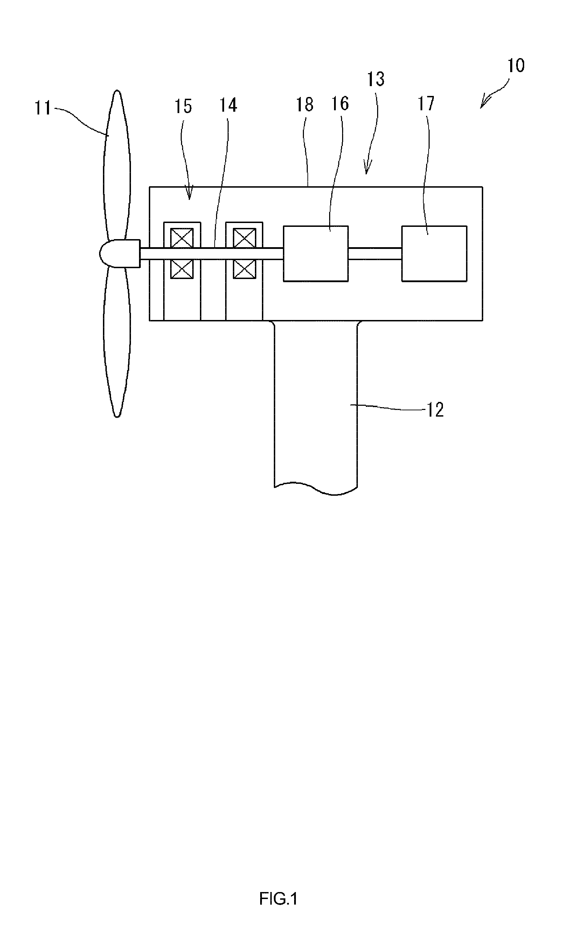

Hereinafter, embodiments of the invention will be described in detail with reference to the accompanying drawings. FIG. 1 is a schematic view illustrating a wind power generator system 10 to which a grease supply system in an embodiment of the invention is applied. The wind power generator system 10 includes a windmill 11, a support column 12, and a nacelle 13. The windmill 11 has a plurality of blades that are provided at the distal end of a main shaft 14, and receives the wind to rotate the main shaft 14. The nacelle 13 includes, for example, the main shaft 14, a support mechanism 15, a speed increaser 16, a generator 17, and a casing 18. The support mechanism 15 supports the main shaft 14. The speed increaser 16 increases the rotating speed of the main shaft 14. The generator 17 produces electric power with the use of rotating power due to the rotation of which the speed has been increased by the speed increaser 16. The casing 18 accommodates the aforementioned components. The support column 12 supports the nacelle 13 so as to allow the nacelle 13 to horizontally swing around a vertical axis.

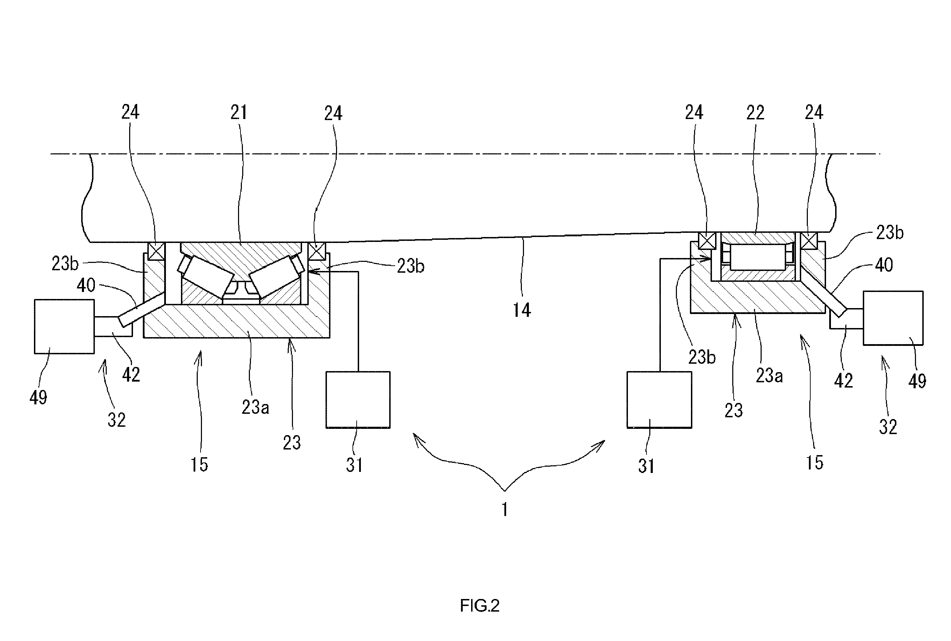

FIG. 2 is a schematic view illustrating the grease supply systems. The grease supply systems 1 in the present embodiment supply grease to the support mechanisms 15 that support the main shaft 14. The support mechanisms 15 include a pair of rolling bearings 21, 22 which are arranged in the axial direction of the main shaft 14, and bearing boxes 23 that accommodate therein the bearings 21, 22, respectively. The rolling bearing 21 is a double-row tapered roller bearing and the rolling bearing 22 is a cylindrical roller bearing.

Each of the bearing boxes 23 is formed in a U-shape in cross section, having an outer peripheral wall 23a and a pair of side walls 23b, and is provided around the outer periphery of the main shaft 14. Further, the rolling bearings 21, 22 are accommodated respectively in spaces defined by the main shaft 14 and the bearing boxes 23. Seal members 24 are provided between the main shaft 14 and the side walls 23b of each of the bearing boxes 23. Thus, the insides of each of the bearing boxes 23 is sealed by the seal members 24.

Semi-solid grease used as a lubricant is charged in the bearing boxes 23 in order to lubricate the rolling bearings 21, 22. The grease is supplied by the grease supply systems 1. Each of the grease supply systems 1 is formed of an automatic supply unit 31 and a forced discharge unit 32. Each automatic supply unit 31 has a function of supplying a predetermined amount of grease into a corresponding one of the bearing boxes 23, and a function as an automatic replenishing device for periodically (intermittently) or continuously replenishing the bearing box 23 with the grease.

On the other hand, each forced discharge unit 32 has a function of periodically (intermittently) or continuously discharging the grease from a corresponding one of the bearing boxes 23. Accordingly, the grease supply system 1 forcibly discharges the grease from the bearing box 23 with the use of the forced discharge unit 32, and at the same time, replenishes the bearing box 23 with new grease with the use of the automatic supply unit 31. Thus, the amount of grease in the bearing box 23 is maintained at a substantially constant amount while the grease is prevented from being deteriorated. In this way, it is possible to maintain the lubricating performance for a long time.

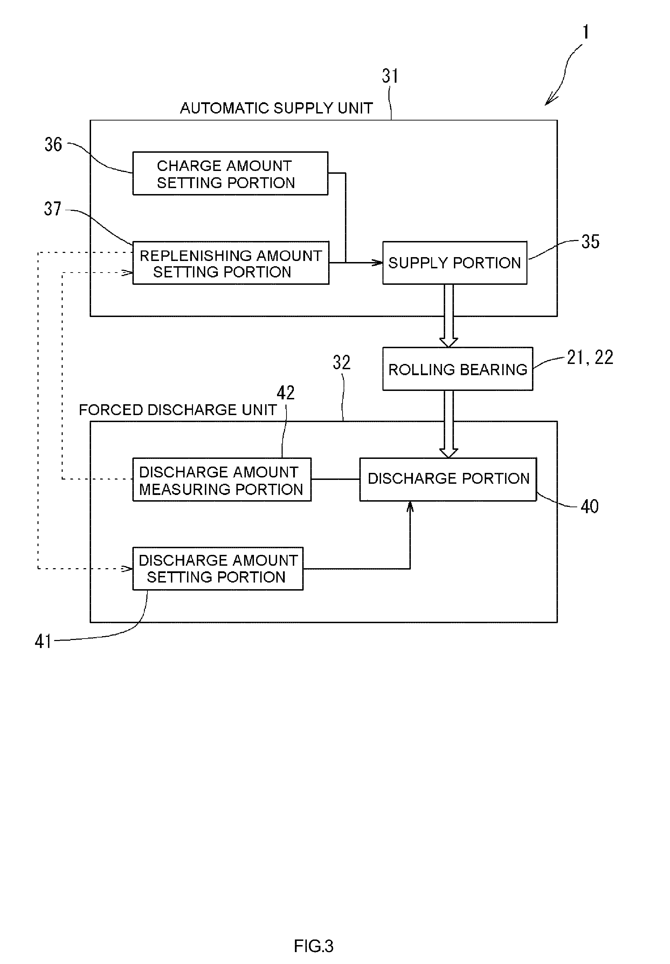

FIG. 3 shows a block diagram for illustrating the grease supply system. The automatic supply unit 31 in the grease supply system 1 has a supply portion 35, a charge amount setting portion 36 and a replenishing amount setting portion 37. The supply portion 35 supplies the grease into the bearing box 23. The charge amount setting portion 36 sets an amount of grease that is charged into the bearing box 23. The replenishing amount setting portion 37 sets an amount of grease with which the bearing box 23 is replenished. The supply portion 35 includes, for example, a tank (not shown) that stores the grease, and a pump (now shown) that draws the grease out of the tank and supplies the grease into the bearing box 23.

The charge amount setting portion 36 has a function of computing an amount of grease that is charged into the bearing box 23, on the basis of an internal volume of the bearing box 23, a volume of the rolling bearing 21 or 22, and the like, and a function of controlling the operation of the supply portion 35 such that the computed amount of grease is supplied into the bearing box 23. The amount of grease that is charged into the bearing box 23 is set by taking into account the degree of rotational resistance of the rolling bearing 21 or 22, the lubricating performance provided by the grease, and the like. For example, it is possible to charge, into the bearing box 23, the grease in an amount with which the grease occupies approximately 70% of a residual space in the bearing box 23.

The replenishing amount setting portion 37 has a function of computing a replenishing amount of grease by which the lubricating performance in the bearing box 23 is maintained, on the basis of a rotating speed of the main shaft 14, a degree of deterioration of the grease and the like, which are assumable, and a function of controlling the operation of the supply portion 35 such that the computed replenishing amount of grease is supplied into the bearing box 23. Thus, the charge amount setting portion 36 and the replenishing amount setting portion 37 not only set the charge amount and the replenishing amount but also substantially serve as control portions that control the operation of the supply portion 35.

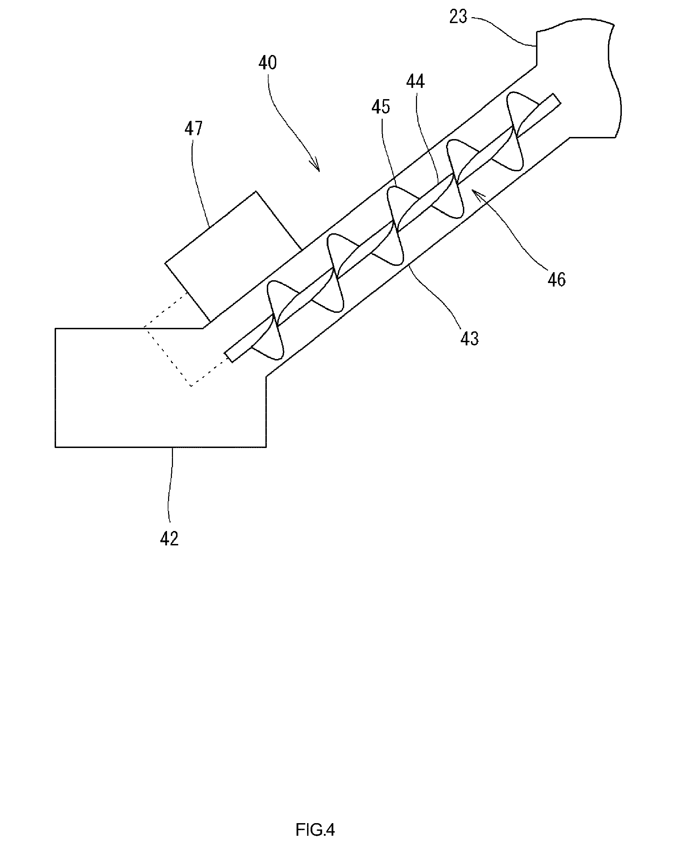

The forced discharge unit 32 includes a discharge portion 40, a discharge amount setting portion 41, and a discharge amount measuring portion 42. The discharge portion 40 discharges the grease from the bearing box 23. The discharge amount setting portion 41 sets an amount of grease that is discharged from the bearing box 23. The discharge amount measuring portion 42 measures an amount of grease discharged by the discharge portion 40. FIG. 4 is a schematic view illustrating the discharge portion 40 of the forced discharge unit 32. The discharge portion 40 in the present embodiment is formed of a screw pump. The screw pump 40 includes a tubular body 43, a screw 46 and a drive portion 47. The tubular body 43 defines a passage for the grease. The screw 46 has a spiral blade 45 provided on the outer periphery of a rotary shaft 44. The drive portion 47 includes a motor, a power transmission mechanism and the like, and rotates the screw 46. The screw pump 40 delivers the grease by rotating the screw 46. The screw pump 40 is arranged in an inclined posture, and accordingly, the upper portion faces the bottom portion of the bearing box 23 so that the grease that is accumulated at the bottom portion of the bearing box 23 is forcibly discharged.

The discharge amount setting portion 41 has a function of computing an amount of grease that is discharged from the bearing box 23, and a function of controlling the operation of the discharge portion 40 such that the computed amount of grease is discharged from the bearing box 23. That is, the discharge amount setting portion 41 substantially serves as a control portion that controls the discharge portion 40. The amount of grease that is discharged by the discharge portion 40 is set in accordance with the replenishing amount of grease set by the replenishing amount setting portion 37 in the automatic supply unit 31. Specifically, the discharge amount of grease is set in association with the replenishing amount of grease such that the amount of grease in the bearing box 23 is maintained at a constant charge value.

The discharge amount measuring portion 42 receives the grease discharged by the discharge portion 40, and measures a weight or a volume of the grease. The discharge amount of grease measured by the discharge amount measuring portion 42 is used to update the replenishing amount of grease that is supplied by the automatic supply unit 31. The forced discharge unit 32 includes, in addition to the above-mentioned components, a collecting tank 49 in which the grease after the discharge amount of the grease is measured by the discharge amount measuring portion 42 is collected and stored.

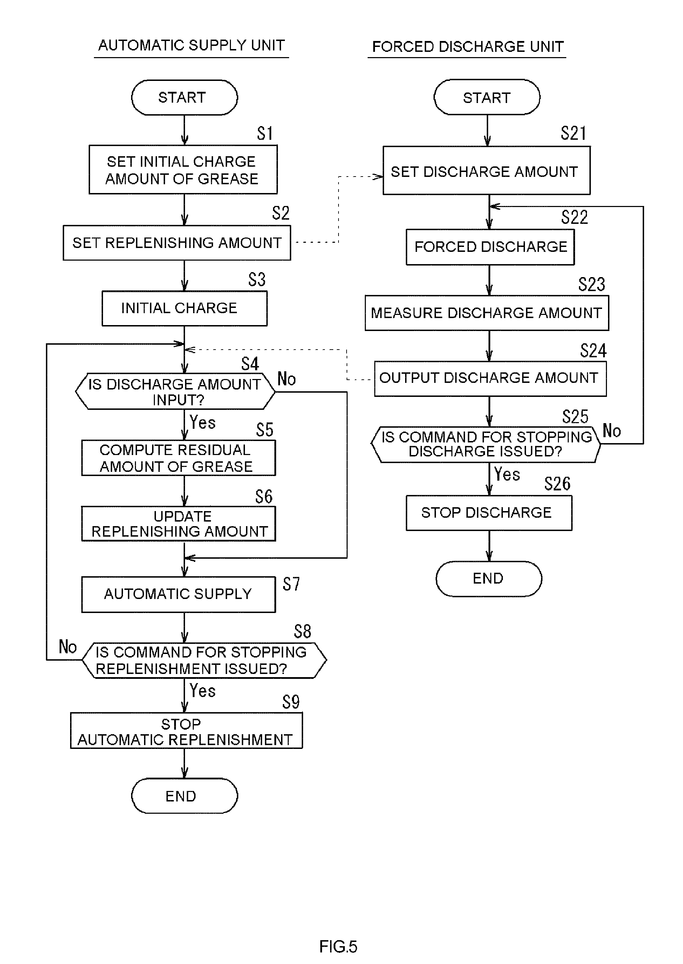

Description will be provided on a process of operating the grease supply system 1 in the present embodiment. FIG. 5 is a flowchart for explaining the process of operating the grease supply system 1. At first, when the grease supply system 1 is started, the charge amount setting portion 36 in the automatic supply unit 31 computes a charge amount of grease on the basis of, for example, a volume of the bearing box 23, and sets an initial charge amount of grease that is charged into the bearing box 23 on the basis of the result of computation (step S1).

Then, the replenishing amount setting portion 37 of the automatic supply unit 31 sets a replenishing amount of grease that is charged into the bearing box 23 per unit time (step S2). It is noted that the replenishing amount of grease, which is set in step S2, is an initial set value, and is appropriately updated in accordance with the discharge amount of grease, which will be described later. Further, the replenishing amount setting portion 37 outputs (transmits) information on the thus set replenishing amount of grease, to the discharge amount setting portion 41 of the forced discharge unit 32. Next, the charge amount setting portion 36 of the automatic supply unit 31 controls the operation of the supply portion 35, and accordingly, the supply portion 35 supplies the initial charge amount of grease, which has been set by the charge amount setting portion 36, into the bearing box 23 (step S3).

The discharge amount setting portion 41 of the forced discharge unit 32 receives information on the replenishing amount of grease, which is output from the replenishing amount setting portion 37, and sets a discharge amount of grease per unit time, based on the replenishing amount (step S21). Thereafter, the discharge amount setting portion 41 of the forced discharge unit 32 controls the operation of the discharge portion 40, and accordingly, the discharge portion 40 forcibly discharges the thus set discharge amount of grease from the bearing box 23 (step S22).

Then, the discharge amount measuring portion 42 of the forced discharge unit 32 measures an amount of the grease discharged by the discharge portion 40 (step S23). Further, the discharge amount measuring portion 42 outputs (transmits) information on the thus measured discharge amount of grease, to the replenishing amount setting portion 37 of the automatic supply unit 31. The automatic supply unit 31 determines whether the information on the discharge amount is received from the forced discharge unit 32 (step S4). If the information is not received (No), the supply portion 35 replenishes the bearing box 23 with the replenishing amount of grease, which has been set in step S2 (step S7). Further, if the information on the discharge amount is received from the forced discharge unit 32 (Yes in step S4), the replenishing amount setting portion 37 computes a residual amount of grease in the bearing box 23, on the basis of the discharge amount of grease and the initial charge amount in the bearing box 23 (step S5). Then, the replenishing amount setting portion 37 executes a process for updating the replenishing amount of grease with which the bearing box 23 is to be replenished, on the basis of the thus computed residual amount of grease (step S6).

Thereafter, the replenishing amount setting portion 37 controls the operation of the supply portion 35, and accordingly, the supply portion 35 replenishes the bearing box 34 with the updated replenishing amount of grease (step S7). The automatic supply unit 31 determines whether, for example, an operator issues a command for stopping the replenishment of grease (stopping the operation of the grease supply system 1) (step S8), and repeats steps S4 to S7 if the command is not issued, but stops the automatic replenishment if the command is issued (step S9). Similarly, the forced discharge unit 32 determines whether a command for stopping the discharge of grease (stopping the operation of the grease supply system 1) is issued (step S25), and repeats steps S22 to S24 if the command is not issued, but stops the discharge of grease if the command is issued (step S26).

As described above, the grease supply system 1 in the present embodiment is configured so that the bearing box 23 is replenished with the grease by the automatic supply unit 31 while the grease is discharged from the bearing box 23 by the forced discharge unit 32. It is difficult to naturally discharge the grease from the bearing box 23 because the grease has a high degree of viscosity. However, according to the present embodiment, the grease is forcibly discharged by the discharge portion 40 of the forced discharge unit 32, and as a result, the grease is discharged more reliably.

Further, if the amount of grease in the bearing box 23 is excessively large, the possibility that the rotation of the main shaft 14 may be hindered by a resistance caused by the viscosity of the grease and the possibility of leakage of the grease from the seal members 24 are increased. On the other hand, if the amount of grease is excessively small, poor lubrication is caused, and as a result, the possibility that the durability of the rolling bearing 21 or 22 may be lowered, would be caused. However, in the grease supply system in the present embodiment, the amount of grease forcibly discharged by the discharge portion 40 of the forced discharge unit 32 is measured, and the bearing box 23 is replenished with an amount of grease, which corresponds to the amount of the discharged grease. Thus, it is possible to maintain the amount of grease in the bearing box 23 at a substantially constant value. Thus, problems, such as, an increase in rotational resistance, leakage of grease and lowering of the durability of the rolling bearings 21, 22, rarely occur.

Further, the screw pump 40 is able to continuously discharge the grease at a constant discharge rate (discharge amount) even though the rotating speed of the rolling bearing 21 or 22 largely fluctuates, or even though the grease has a high degree of viscosity. Accordingly, the screw pump is preferably used as the discharge portion 40 that discharges the grease from the rolling bearing 21 or 22 which supports the main shaft of the wind power generator system 10.

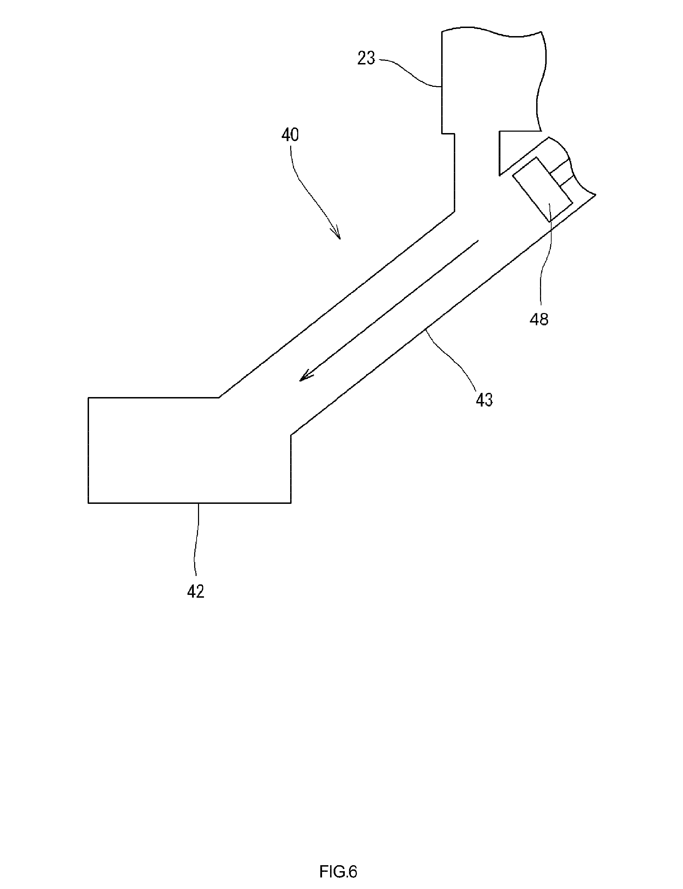

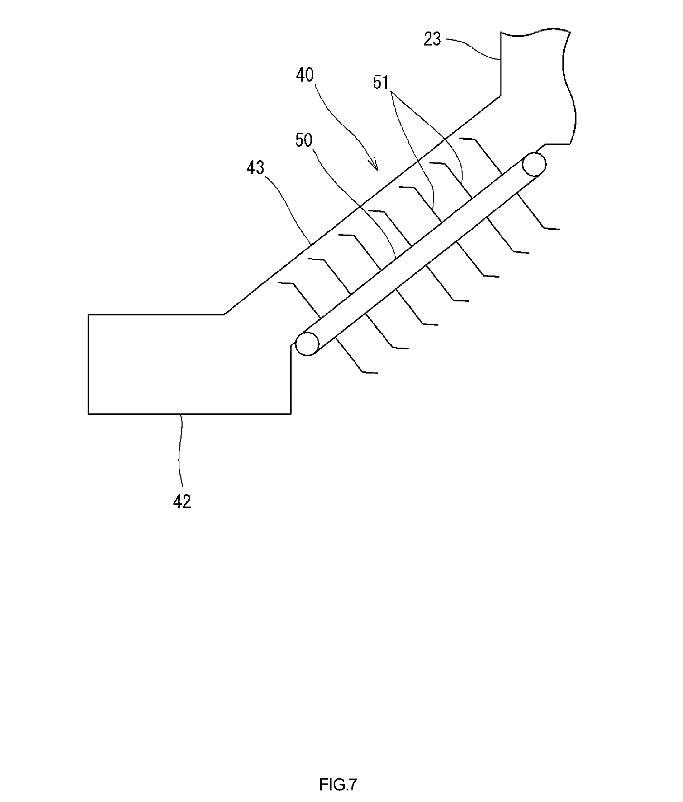

The configuration of the discharge portion 40 of the forced discharge unit 32 may be modified from that shown in FIG. 4 into that shown in FIG. 6 or FIG. 7. FIG. 6 and FIG. 7 are schematic views respectively illustrating discharge portions of the forced discharge unit in other embodiments of the invention. The discharge portion 40 of the forced discharge unit 32 shown in FIG. 6 includes a pusher 48 that is able to reciprocate in the tubular body 43 along the central axis of the tubular body 43. The grease is pushed out by the pusher 48 so as to be forcibly discharged from the bearing box 23. The discharge portion 40 of the forced discharge unit 32 shown in FIG. 7 is formed of a plurality of transfer members 51 attached, at predetermined intervals, to a conveyor belt 50 looped over a pair of pulleys. By turning the conveyer belt 50, the grease is forcibly discharged by the transfer members 51.

The invention should not be limited to the embodiments described above, and accordingly, various modifications and changes may be made to these embodiments, within the technical scope of the invention which will be defined in the appended claims. For example, the invention may be employed to supply grease to rolling bearings which are used in various apparatus, in addition to the rolling bearings 21, 22 which support the main shaft 14 of the wind power generator system 10. It is noted here that the invention is more effectively applied to a wind power generator system in which the replenishment of grease is difficult and for which the frequency of maintenance is required to be reduced.

Various configurations may be used as the configuration of the discharge portion 40 that discharges the grease, other than the configurations described in the above-mentioned embodiments. Further, any other types of rolling bearings including ball bearings may be used as the rolling bearings 21, 22 into which the grease is supplied, instead of the tapered roller bearing and the cylindrical roller bearing. Further, the charge amount setting portion 36 and the replenishing amount setting portion 37 of the automatic supply unit 31, and the discharge amount setting portion 41 of the forced discharge unit 32 may be constituted by a common controller. Further, the supply portion according to the invention may only replenish the bearing 21 or 22 with the grease, without initially charging the grease into the bearing 21 or 22.

The grease supply system 1 according to the invention may carry out the replenishment and discharge of the grease, direct into and from the inside of the rolling bearing 21 or 22 and also carry out the replenishment and the discharge of the grease, indirect into and from the rolling bearing 21 or 22, by carrying out the replenishment and discharge of the grease direct into and from the bearing box 23, in the case where the rolling bearing 21 or 22 is accommodated in the bearing box 23, and the grease is charged in the bearing box 23.

According to the invention, the grease is reliably discharged from the rolling bearing, and as well, the replenishing amount of the grease is adjusted in accordance with a discharge amount of the grease. Therefore, it is possible to maintain the charge amount of the grease in the rolling bearing at a predetermined value.

## Claims

1. A grease supply system for a rolling bearing, comprising:
a discharge portion that forcibly discharges grease from a rolling bearing;
a discharge amount measuring portion that measures an amount of grease discharged by the discharge portion;
a replenishing amount setting portion that sets a replenishing amount of grease on the basis of the discharge amount of grease measured by the discharge amount measuring portion; and
a supply portion that automatically replenishes the rolling bearing with the set amount of grease.

2. The grease supply system for a rolling bearing according to claim 1, wherein the discharge portion is formed of a screw pump
